# EUROPÄISCHE PATENTSCHRIFT

(11) **EP 3 520 592 B1**
(45) Veröffentlichungstag und Bekanntmachung des Hinweises auf die Patenterteilung: **09.12.2020**
(21) Anmeldenummer: 19155427.8
(22) Anmeldetag: 05.02.2019
(51) Int. Cl.: A01C 7/04, A01C 7/08, A01C 7/10

(54) **VERFAHREN ZUM AUSBRINGEN VON KÖRNIGEM MATERIAL**
METHOD FOR APPLYING GRANULAR MATERIAL
PROCÉDÉ D'ÉPANDAGE DE MATIÈRE GRANULAIRE

(30) Priorität: 06.02.2018 DE 102018102582
(43) Veröffentlichungstag der Anmeldung: 07.08.2019
(60) Teilanmeldung: 20199515.6
(73) Patentinhaber: Amazonen-Werke H. Dreyer GmbH & Co. KG, 49205 Hasbergen (DE)
(72) Erfinder: HILBERT, Florenz, 48282 Emsdetten (DE); JOHANNABER, Stefan Jan, 49536 Lienen (DE); STEIN, Florian, 49078 Osnabrück (DE); TECKEMEYER, Stephan, 49504 Lotte (DE); WIEBUSCH, Thorsten, 49205 Hasbergen (DE)

(56) Entgegenhaltungen:
- EP-A1- 3 135 089
- EP-A2- 0 752 203
- WO-A1-2015/015005
- WO-A1-2015/094108
- DE-A1-102015 116 378
- FR-A1- 2 973 790
- US-A1- 2017 086 356

## Beschreibung

Die Erfindung betrifft ein Verfahren zum Ausbringen von körnigem Material, insbesondere Saatgut, nach Patentanspruch 1 und eine landwirtschaftliche Ausbringmaschine für körniges Material nach Patentanspruch 11.

Bei der Ausbringung von Saatgut mittels einer Einzelkornsämaschine kommt der Saatgutvereinzelung eine besondere Bedeutung zu, da das Vereinzelungsergebnis sich unmittelbar auf die Ablage des Saatguts auswirkt. Eine fehlerhafte Vereinzelung kann zu Fehlstellen bei der Saatgutablage und/oder einer Ablage von mehreren Saatkörnern pro Ablagestelle führen. Dies wirkt sich letztendlich negativ auf die notwendige Saatgutmenge und den Ertrag aus. Mithin wird stets eine möglichst fehlerfreie Vereinzelung angestrebt.

Bei gattungsgemäßen Maschinen erfolgt zunächst die Erzeugung von mehreren mit körnigem Material beladenen Einzelluftströmungen. Dies erfolgt beispielsweise mittels eines Verteilerkopfsystems, wie beispielsweise in der Druckschrift DE 10 2015 121 600 A1 vorgeschlagen. Alternativ können die mehreren mit körnigem Material beladenen Einzelluftströmungen auch mit einem als Nursingsystem ausgebildeten Verteilersystem erzeugt werden.

Die mit körnigem Material beladenen Einzelluftströmungen sind üblicherweise jeweils einer Vereinzelungseinrichtung zugeordnet, mittels welcher die Körner des körnigen Materials der jeweiligen Einzelluftströmung dann vereinzelt werden. Damit den jeweiligen Vereinzelungseinrichtungen stets eine ausreichende Menge von körnigem Material zur Vereinzelung zur Verfügung steht, verfügen entsprechende Vereinzelungseinrichtungen über einen Pufferspeicher, in welchem das von den Einzelluftströmungen zur Verfügung gestellte körnige Material zwischengespeichert beziehungsweise temporär bevorratet werden kann.

Entsprechende Sämaschinen sind beispielsweise in der US 20170086356 A1, der FR 2 973 790 A1, EP 3 135 089 A1 und der WO 2015 015 005 A1 beschrieben.

Es hat sich gezeigt, dass während des Ausbringvorgangs eine gleichmäßige Bereitstellung von körnigem Material für die einzelnen Vereinzelungseinrichtungen bisher nicht gewährleistet werden kann, sodass die Pufferspeicher von einzelnen Vereinzelungseinrichtungen entweder überlaufen oder leerlaufen können, sodass die Ablagegüte zumindest temporär erheblich beeinträchtigt wird. Dies kann zu einem erheblichen Ertragsverlust und zu einer deutlichen Steigerung der für die Aussaat notwendigen Saatgutmenge führen.

Die der Erfindung zugrundeliegende Aufgabe besteht somit darin, eine gleichmäßige Bereitstellung von körnigem Material für die Vereinzelungseinrichtungen einer landwirtschaftlichen Ausbringmaschine während des Ausbringvorgangs zu ermöglichen.

Die Aufgabe wird gelöst durch ein Verfahren nach Anspruch 1.

Die Erfindung macht sich die Erkenntnis zunutze, dass mittels zumindest eines Betriebsparameters einer Vereinzelungseinrichtung der Zustand, insbesondere der Füllzustand des Pufferspeichers, der Vereinzelungseinrichtung präzise erfasst werden kann. Das Verteilersystem kann dann auf Grundlage des Zustands der jeweiligen Vereinzelungseinrichtungen die Erzeugung der mit körnigem Material beladenen Einzelluftströmungen an die jeweiligen Vereinzelungseinrichtungen anpassen. Somit kann die Menge von körnigem Material, welche einer oder mehreren Vereinzelungseinrichtungen jeweils über eine Einzelluftströmung bereitgestellt wird, zumindest temporär erhöht oder verringert werden. Betriebssituationsbedingte Schwankungen bei der Verteilung des körnigen Materials auf die Vereinzelungseinrichtungen der landwirtschaftlichen Ausbringmaschine können auf diese Weise effektiv und vergleichsweise einfach ausgeglichen werden.

Bei dem Saatgut handelt es sich vorzugsweise um Getreidesaatgut, wobei das körnige Material in diesem Fall Getreidesaatkörner sind. Insbesondere umfasst das Verfahren ebenfalls das Erfassen des zumindest einen Betriebsparameters der jeweiligen Vereinzelungseinrichtungen. Vorzugsweise erfolgt das Steuern des Verteilersystems im Rahmen einer Regelung, wobei der zumindest eine Betriebsparameter der jeweiligen Vereinzelungseinrichtungen die zurückgeführte Regelgröße einer entsprechenden Regelung darstellt.

Außerdem ist ein Verfahren erfindungsgemäß, bei welchem die Vereinzelungseinrichtungen jeweils dazu eingerichtet sind, eine Puffermenge an körnigem Material temporär zu bevorraten, wobei der zumindest eine Betriebsparameter, in dessen Abhängigkeit das Verteilersystem gesteuert wird, die aktuell bevorratete Puffermenge betrifft oder von der aktuell bevorrateten Puffermenge abhängig ist. Erfindungsgemäß rotiert die Puffermenge einer Vereinzelungseinrichtung innerhalb eines Pufferspalts der entsprechenden Vereinzelungseinrichtung. Ein Betriebsparameter, welcher von der aktuell bevorrateten Puffermenge abhängig ist, ist erfindungsgemäß die Stromaufnahme der jeweiligen Vereinzelungseinrichtungen, sofern die aktuell bevorratete Puffermenge das notwendige Antriebsmoment der jeweiligen Vereinzelungseinrichtung beeinflusst. Mit abnehmender Puffermenge an körnigem Material in der Vereinzelungseinrichtung sinkt vorzugsweise das notwendige Antriebsmoment und somit die Stromaufnahme der jeweiligen Vereinzelungseinrichtung. Mit zunehmender Puffermenge an körnigem Material in der Vereinzelungseinrichtung steigt vorzugsweise das notwendige Antriebsmoment und somit die Stromaufnahme der jeweiligen Vereinzelungseinrichtung.

Außerdem ist ein erfindungsgemäßes Verfahren bevorzugt, bei welchem das Verteilersystem in Abhängigkeit des zumindest einen Betriebsparameters der jeweiligen Vereinzelungseinrichtung derart gesteuert wird, dass die Vereinzelungseinrichtungen jeweils eine Solldrehzahl aufweisen und/oder derart, dass die in den jeweiligen Vereinzelungseinrichtungen bevorratete Puffermenge an körnigem Material im Wesentlichen übereinstimmt. Die Solldrehzahl der jeweiligen Vereinzelungseinrichtungen ist abhängig von der gewünschten Körnerabgabefrequenz und der Betriebssituation. Somit sind unter anderem die beabsichtigte Fahrgeschwindigkeit und der gewünschte Körnerabstand bei der Auswahl der Solldrehzahl an den jeweiligen Vereinzelungseinrichtungen zu berücksichtigen. Die Solldrehzahl kann dabei, beispielsweise während einer Geradeausfahrt, an sämtlichen Vereinzelungseinrichtungen übereinstimmen. Alternativ können sich die Solldrehzahlen der jeweiligen Vereinzelungseinrichtungen voneinander unterscheiden, beispielsweise während einer Kurvenfahrt. Während einer Kurvenfahrt steigt die Solldrehzahl der jeweiligen Vereinzelungseinrichtungen von innen nach außen an, da sich die kurvenäußeren Vereinzelungseinrichtungen mit einer höheren Geschwindigkeit bewegen als die kurveninneren Vereinzelungseinrichtungen. Zur Einhaltung eines gleichmäßigen Körnerabstands ist also die Drehzahl der Vereinzelungseinrichtungen während einer Kurvenfahrt entsprechend anzupassen. Aufgrund einer ungleichmäßigen Verteilung des körnigen Materials über die mit körnigem Material beladenen Einzelluftströmungen kann es jedoch zu Unterschieden in der bevorrateten Puffermenge der jeweiligen Vereinzelungseinrichtungen kommen. Durch ein entsprechendes Steuern des Verteilersystems können diese Ungleichmäßigkeiten ausgeglichen werden, sodass die Pufferspeicher der jeweiligen Vereinzelungseinrichtungen stets im Wesentlichen übereinstimmende Füllstände aufweisen oder zumindest nicht leerlaufen und/oder eine Überfüllung erfahren.

In einer Weiterbildung des erfindungsgemäßen Verfahrens weist das Verteilersystem eine Hauptverteileinrichtung auf und das Erzeugen von mehreren mit körnigem Material beladenen Einzelluftströmungen umfasst das Aufteilen einer mit körnigem Material beladenen Hauptluftströmung in mehrere mit körnigem Material beladene Einzelluftströmungen mittels der Hauptverteileinrichtung. Vorzugsweise ist die Hauptverteileinrichtung als Verteilerkopf ausgebildet. Das Verändern von einer oder mehreren mit körnigem Material beladenen Einzelluftströmungen kann das Verändern des Aufteilungsverhältnisses von der mit körnigem Material beladenen Hauptluftströmung auf die mehreren mit körnigem Material beladenen Einzelluftströmungen umfassen. Ferner kann das Verändern von einer oder mehreren mit körnigem Material beladenen Einzelluftströmungen auch das temporäre Unterbrechen einer oder mehrerer mit körnigem Material beladenen Einzelluftströmungen umfassen.

In einer anderen bevorzugten Ausführungsform des erfindungsgemäßen Verfahrens weist die Hauptverteileinrichtung verstellbare Umlenkelemente auf, wobei die Umlenkelemente jeweils dazu eingerichtet sind, eine mit körnigem Material beladene Einzelluftströmung teilweise oder vollständig wieder der mit körnigem Material beladenen Hauptluftströmung zuzuführen, wobei das Steuern des Verteilersystems in Abhängigkeit des zumindest einen Betriebsparameters der jeweiligen Vereinzelungseinrichtungen das Verstellen einer oder mehrerer Umlenkelemente der Verteileinrichtung in Abhängigkeit des zumindest einen Betriebsparameters der jeweiligen Vereinzelungseinrichtungen umfasst. Das Verstellen eines Umlenkelements kann das Ändern der Ausrichtung und/oder Position des Umlenkelements umfassen. Die Umlenkelemente sind vorzugsweise Weichen, über welche jeweils ein Teil einer mit körnigem Material beladenen Einzelluftströmung zurück in die mit körnigem Material beladene Hauptluftströmung geleitet werden kann. Die Umlenkelemente können in eine gewünschte Zwischenstellung zwischen einer geöffneten und einer geschlossenen Position verbracht werden, um den Durchfluss an körnigem Material zu steuern. Alternativ oder zusätzlich können die Umlenkelemente gepulst zwischen einer vollständig geöffneten und einer vollständig geschlossenen Position verbracht werden, um den Durchfluss an körnigem Material zu steuern. Die Rückführleitungen, welche jeweils eine umgelenkte und mit körnigem Material beladene Einzelluftströmung wieder der mit körnigem Material beladenen Hauptluftströmung zuführen, können jeweils mit einer Bypassleitung verbunden sein. Die Bypassleitungen verbinden vorzugsweise jeweils eine Rückführleitung der Hauptverteileinrichtung mit einer Zuführleitung, wobei die mit körnigem Material beladenen Einzelluftströmungen mittels der Zuführleitungen den jeweiligen Vereinzelungseinrichtungen zugeleitet werden. Insbesondere sind die jeweiligen Bypassleitungen derart ausgebildet, dass innerhalb der Bypassleitung körniges Material aus der jeweiligen Einzelluftströmung abgeschieden wird, sodass das körnige Material, welches in die jeweiligen Bypassleitungen einströmt, den jeweiligen Vereinzelungseinrichtungen nicht bereitgestellt wird. Das in den jeweiligen Bypassleitungen abgeschiedene körnige Material kann sich innerhalb der Bypassleitungen ansammeln und/oder gemeinsam mit einer Restluftströmung wieder der mit körnigem Material beladenen Hauptluftströmung zugeführt werden. In einer weiteren Ausführungsform des erfindungsgemäßen Verfahrens umfasst das Verteilersystem mehrere Nursingeinrichtungen, wobei jeder Vereinzelungseinrichtung eine Nursingeinrichtung vorgeschaltet ist und das Steuern des Verteilersystems in Abhängigkeit des zumindest einen Betriebsparameters der jeweiligen Vereinzelungseinrichtungen das Steuern der Nursingeinrichtungen in Abhängigkeit des zumindest einen Betriebsparameters der der jeweiligen Nursingeinrichtung nachgeschalteten Vereinzelungseinrichtung und/oder das Steuern der mit körnigem Material beladenen Einzelluftströmungen zwischen den Nursingeinrichtungen und den jeweiligen Vereinzelungseinrichtungen, insbesondere mittels jeweils eines Steuerventils, umfasst. Die mehreren Nursingeinrichtungen können in einer Nursingeinheit strukturell zusammengefasst sein. Die Nursingeinrichtungen stellen eine Alternativlösung zu einem Verteilerkopfsystem dar, bei welcher mehreren unbeladenen Einzelluftströmungen körniges Material hinzudosiert wird, sodass sich mehrere mit körnigem Material beladene Einzelluftströmungen ergeben. Insbesondere werden die Nursingeinrichtungen oder die mit körnigem Material beladenen Einzelluftströmungen zwischen den Nursingeinrichtungen und den jeweiligen Vereinzelungseinrichtungen in Abhängigkeit der Stromaufnahme der jeweiligen Vereinzelungseinrichtungen gesteuert. Die Steuerventile sind vorzugsweise jeweils zwischen einer Nursingeinrichtung und der der Nursingeinrichtung zugeordneten Vereinzelungseinrichtung angeordnet und/oder als 2/2-Wege-Ventil ausgebildet. Die Steuerventile können beispielsweise gepulst betrieben werden.

In einer bevorzugten Ausführungsform des erfindungsgemäßen Verfahrens umfasst der zumindest eine Betriebsparameter der jeweiligen Vereinzelungseinrichtungen die Stromaufnahme der jeweiligen Vereinzelungseinrichtungen. Erfindungsgemäß umfasst das Verfahren das Erfassen der Stromaufnahme der jeweiligen Vereinzelungseinrichtungen. Vorzugsweise sind die Vereinzelungseinrichtungen derart ausgebildet, dass der Füllstand des jeweiligen Pufferspeichers das notwendige Antriebsmoment der jeweiligen Vereinzelungseinrichtungen beeinflusst. Wenn die jeweiligen Vereinzelungseinrichtungen derart gesteuert oder geregelt werden, dass eine konstante Drehzahl einer Vereinzelungsscheibe oder eines elektromotorischen Antriebs beibehalten wird, kann auf Grundlage des notwendigen Antriebsmomentes der Füllstand der Pufferspeicher der jeweiligen Vereinzelungseinrichtungen ermittelt werden. Da mit zunehmendem Antriebsmoment und konstant bleibender Drehzahl die Stromaufnahme eines elektromotorischen Antriebs ansteigt, ist es ebenfalls möglich, aus der Stromaufnahme der jeweiligen Vereinzelungseinrichtungen den Füllstand des Pufferspeichers der jeweiligen Vereinzelungseinrichtungen abzuleiten. Um ein Überfüllen oder Leerlaufen einzelner oder mehrerer Pufferspeicher zu verhindern, kann dann das Verteilersystem in Abhängigkeit der Stromaufnahme der jeweiligen Vereinzelungseinrichtungen zur Anpassung der jeweiligen Einzelluftströmung gesteuert werden.

In einer anderen Ausführungsform des erfindungsgemäßen Verfahrens wird der zumindest eine Betriebsparameter der jeweiligen Vereinzelungseinrichtungen mittels einer Messsensorik der jeweiligen Vereinzelungseinrichtungen ermittelt. Vorzugsweise wird die Puffermenge an körnigem Material in den jeweiligen Vereinzelungseinrichtungen durch die Messsensorik erfasst. Die Messsensorik kann dabei beispielsweise eine piezoelektrische Messeinheit umfassen. Alternativ oder zusätzlich kann die Messsensorik eine kapazitive und/oder eine optische Messeinheit umfassen. Alternativ oder zusätzlich kann die sensorische Puffermengenerfassung entsprechend einer der in DE 10 2015 114 151 A1 vorgeschlagenen Umsetzung erfolgen. Eine sensorische Erfassung der Puffermenge beziehungsweise des Füllstands des Pufferspeichers kann beispielsweise dann vorteilhaft sein, wenn die Stromaufnahme einer Vereinzelungseinrichtung, etwa aufgrund von Beizablagerungen oder aufgrund von Erwärmung, keine verlässliche Aussage über den Pufferfüllstand mehr erlaubt.

Ferner ist ein erfindungsgemäßes Verfahren vorteilhaft, bei welchem das Steuern des Verteilersystems in Abhängigkeit des zumindest einen Betriebsparameters der jeweiligen Vereinzelungseinrichtungen das Verändern von einer oder mehreren mit körnigem Material beladenen Luftströmungen umfasst. Vorzugsweise ist jede mit körnigem Material beladene Einzelluftströmung einer Vereinzelungseinrichtung zugeordnet und die eine oder die mehreren mit körnigem Material beladenen Einzelluftströmungen werden in Abhängigkeit des zumindest einen Betriebsparameters der jeweils zugeordneten Vereinzelungseinrichtung verändert. Das Verändern von einer oder mehreren mit körnigem Material beladenen Einzelluftströmungen kann das Vergrößern und Verkleinern von einer oder mehreren mit körnigem Material beladenen Einzelluftströmungen umfassen. Durch das Verändern einer mit körnigem Material beladenen Einzelluftströmung kann das Verhältnis von Luft und körnigem Material in der jeweiligen Einzelluftströmung angepasst werden. Ferner kann die Menge an körnigem Material, welche mit der Einzelluftströmung transportiert wird, erhöht oder verringert werden. Alternativ oder zusätzlich kann die Strömungsgeschwindigkeit einer mit körnigem Material beladenen Einzelluftströmung verändert werden. Das Steuern des Verteilersystems in Abhängigkeit des zumindest einen Betriebsparameters der jeweiligen Vereinzelungseinrichtung kann somit beispielsweise das Anpassen des Volumen- und/oder Mengenstroms an körnigem Material von einer oder mehreren mit körnigem Material beladenen Einzelluftströmungen umfassen.

Die der Erfindung zugrundeliegende Aufgabe wird ferner durch eine landwirtschaftliche Ausbringmaschine gemäß Anspruch 11 gelöst, wobei die erfindungsgemäße Ausbringmaschine eine Steuerungseinrichtung aufweist, welche dazu eingerichtet ist, das Verteilersystem in Abhängigkeit zumindest eines Betriebsparameters der jeweiligen Vereinzelungseinrichtung zu steuern. Vorzugsweise ist die landwirtschaftliche Ausbringmaschine als Sämaschine, insbesondere als Einzelkornsämaschine für die Getreideaussaat, ausgebildet.

In einer weiteren Ausführungsform der erfindungsgemäßen landwirtschaftlichen Ausbringmaschine ist diese dazu eingerichtet, das Verfahren zum Ausbringen von körnigem Material nach einer der vorstehend beschriebenen Ausführungsformen auszuführen. Hinsichtlich der Vorteile und Modifikationen einer entsprechenden landwirtschaftlichen Ausbringmaschine wird auf die Vorteile und Modifikationen des erfindungsgemäßen Verfahrens verwiesen.

Weitere Einzelheiten der Erfindung sind der Figurenbeschreibung und den Zeichnungen zu entnehmen. Es zeigen
- Fig. 1: ein Ausführungsbeispiel der erfindungsgemäßen landwirtschaftlichen Ausbringmaschine in einer perspektivischen Darstellung;
- Fig. 2: Teile einer erfindungsgemäßen landwirtschaftlichen Ausbringmaschine in einer schematischen Darstellung;
- Fig. 3a: eine Umlenkeinheit eines Verteilersystems einer erfindungsgemäßen landwirtschaftlichen Ausbringmaschine in einem ersten Zustand;
- Fig. 3b: die in der Fig. 3a dargestellte Umlenkeinheit in einem zweiten Zustand;
- Fig. 3c: die in der Fig. 3a dargestellte Umlenkeinheit in einem dritten Zustand; und
- Fig. 4: Teile einer erfindungsgemäßen landwirtschaftlichen Ausbringmaschine in einer schematischen Darstellung.

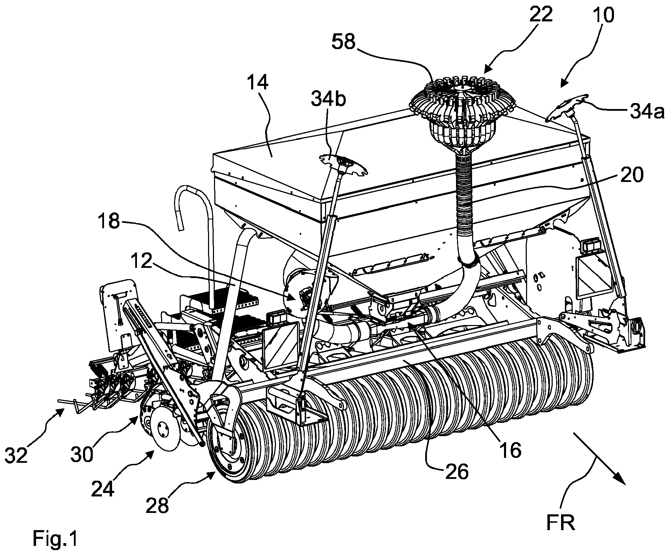

Die Fig. 1 zeigt eine als pneumatische Aufbausämaschine ausgebildete landwirtschaftliche Ausbringmaschine 10 zum Ausbringen von körnigem Material 100, nämlich von Getreide-Saatgut.

Die Ausbringmaschine 10 umfasst einen Rahmenaufbau 12, an welchem ein Vorratsbehälter 14 angeordnet ist. Der Vorratsbehälter 14 ist dazu eingerichtet, das zu verteilende körnige Material 100 zu bevorraten. Der Vorratsbehälter 14 ist über ein Dosierorgan 16 mit einer Förderleitung 20 verbunden, wobei das dosierte körnige Material 100 mittels eines Fördergebläses 18 durch die Förderleitung 20 in Richtung eines Verteilersystems 22 transportiert wird. Das Dosierorgan 16 ist dazu eingerichtet, das auszubringende Material 100 in einstellbaren Mengen in die pneumatisch beaufschlagte Förderleitung 20 einzuspeisen, sodass sich in der Förderleitung 20 eine mit körnigem Material 100 beladene Hauptluftströmung 102 ausbildet. Das Fördergebläse 18 wird beispielsweise über einen Hydraulikmotor angetrieben.

Das Verteilersystem 22 weist eine als Verteilerkopf ausgebildete Hauptverteileinrichtung 58 auf. Der Verteilerkopf des Verteilersystems 22 dient zum Aufteilen der mit körnigem Material 100 beladenen Hauptluftströmung 102 in mehrere mit körnigem Material 100 beladene Einzelluftströmungen 104. Somit werden durch den Verteilerkopf des Verteilersystems 22 mehrere mit körnigem Material 100 beladene Einzelluftströmungen 104 erzeugt.

Der Verteilerkopf des Verteilersystems 22 weist mehrere Ausgangsöffnungen auf, welche gleichmäßig entlang des Umfangs des Verteilerkopfes verteilt sind. Jede Ausgangsöffnung ist pneumatisch über eine Zuführleitung 38 (in Fig. 1 nicht dargestellt) mit einer Vereinzelungseinrichtung 36 (in Fig. 1 nicht dargestellt) verbunden. Die Vereinzelungseinrichtungen 36 sind elektromotorisch angetrieben und dienen zum Vereinzeln der Körner des körnigen Materials 100 der Einzelluftströmungen 104. Die durch eine Vereinzelungseinrichtung 36 vereinzelten Körner des körnigen Materials 100 einer Einzelluftströmung 104 werden dann einem als Säschar ausgebildeten Ausbringelement 24 zugeleitet. Die Ausbringelemente 24 sind an einem Tragrahmen 26 befestigt und jeweils dazu eingerichtet, das auszubringende körnige Material 100 in einer Furche des Ackerbodens abzulegen.

In Fahrtrichtung FR vor den Ausbringelementen 24 ist eine Walze 28 angeordnet, welche als Keilringwalze ausgebildet und dazu eingerichtet ist, den zuvor bearbeiteten Ackerboden rückzuverfestigen. In Fahrtrichtung FR hinter den Ausbringelementen 24 sind Tiefenführungsrollen 30 angeordnet, wobei jeweils einem Ausbringelement 24 eine Tiefenführungsrolle 30 zugeordnet ist. Mittels der Tiefenführungsrollen 30 lässt sich die Ablagetiefe des zu verteilenden körnigen Materials einstellen. In Fahrtrichtung FR hinter den Tiefenführungsrollen 30 sind außerdem Striegel 32 angeordnet, welche dazu eingerichtet sind, das abgelegte körnige Material mit einer einstellbaren Intensität mit loser Erde zu bedecken. Die dargestellten Striegel 32 sind in Zinkenbauweise ausgeführt, wobei alternativ auch Rollenstriegel zum Einsatz kommen können.

Außerdem weist die landwirtschaftliche Ausbringmaschine 10 zwei Spuranreißer 34a, 34b auf, welche jeweils dazu eingerichtet sind, eine Markierung auf dem Ackerboden zu erzeugen. Die Markierungen zeigen die benachbarte Fahrspur an.

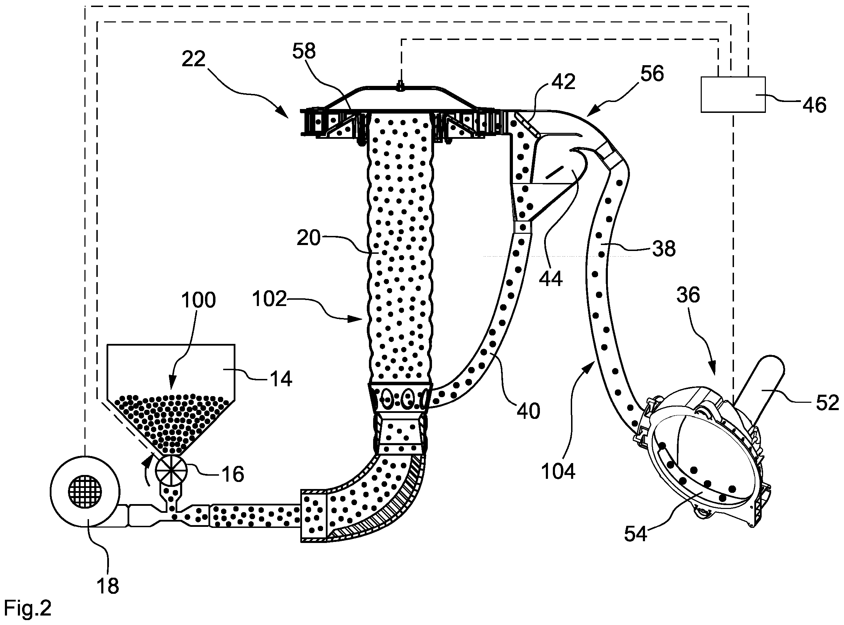

Die Fig. 2 zeigt exemplarisch die Erzeugung einer mit körnigem Material 100 beladenen Einzelluftströmung 104 mittels einer als Verteilerkopf ausgebildeten Hauptverteileinrichtung 58 eines Verteilersystems 22 einer landwirtschaftlichen Ausbringmaschine 10. Die mit körnigem Material beladene Hauptluftströmung 102 wird über die Förderleitung 20 zu der als Verteilerkopf ausgebildeten Hauptverteileinrichtung 58 transportiert. Die Hauptverteileinrichtung 58 weist eine Vielzahl von Umlenkeinheiten 56 auf, welche entlang des Umfang der Hauptverteileinrichtung 58 angeordnet sind. Die in die Umlenkeinheiten 56 eingeleiteten und mit körnigem Material beladenen Luftströmungen können dabei als mit körnigem Material beladene Einzelluftströmungen 104 über Zuführleitungen 38 jeweils einer Vereinzelungseinrichtung 36 zugeführt werden oder über Rückführleitungen 40 in die mit körnigem Material beladene Hauptluftströmung 102 in der Förderleitung 20 zurückgeführt werden.

Die Körner des körnigen Materials 100 der Einzelluftströmungen 104 werden mit einer elektrisch angetriebenen Vereinzelungseinrichtung 36 in Vorbereitung auf die Ablage vereinzelt.

Die Vereinzelungseinrichtung 36 weist eine Vereinzelungsscheibe 54 auf, welche über den Elektromotor 52 rotatorisch angetrieben wird. Außerdem weist die Vereinzelungseinrichtung einen Pufferspeicher für körniges Material 100 auf, in welchem körniges Material 100 temporär vor der Vereinzelung bevorratet werden kann.

In einigen Betriebssituationen kann nicht gewährleistet werden, dass das Verteilersystem 22 die in der Hauptluftströmung 104 befindliche Menge an körnigem Material 100 gleichmäßig auf die den Vereinzelungseinrichtungen 36 zugeleiteten Einzelluftströmungen 104 aufgeteilt wird. Um ein Leerlaufen und Überlaufen einzelner Pufferspeicher zu vermeiden, wird das Verteilersystem 22 in Abhängigkeit der Stromaufnahme der jeweiligen Vereinzelungseinrichtungen 36 durch eine Steuerungseinrichtung 46 derart gesteuert, dass die in den jeweiligen Vereinzelungseinrichtungen 36 bevorratete Puffermenge an körnigem Material 100 während des Ausbringvorgangs stets im Wesentlichen übereinstimmt. Die Steuerung ist dabei als Regelung ausgeführt.

Hierzu wird kontinuierlich die Stromaufnahme an den jeweiligen Vereinzelungseinrichtungen 36 erfasst. Die Stromaufnahme ist abhängig von dem notwendigen Antriebsmoment des Elektromotors 52, um eine vorgegebene Drehzahl des Elektromotors 52 oder der Vereinzelungsscheibe 54 aufrechthalten zu können. Da die in dem Pufferspeicher bevorratete Menge an körnigem Material 100 das notwendige Antriebsmoment zur Einstellung und Aufrechterhaltung einer Drehzahl beeinflusst, kann auf Grundlage der Stromaufnahme einer Vereinzelungseinrichtung 36 der Füllstand des Pufferspeichers der Vereinzelungseinrichtung 36 ermittelt werden. Bei abnehmender Puffermenge an körnigem Material 100 in der Vereinzelungseinrichtung 36 sinkt das notwendige Antriebsmoment und somit die Stromaufnahme der jeweiligen Vereinzelungseinrichtung 36. Bei steigender Puffermenge an körnigem Material 100 in der Vereinzelungseinrichtung 36 steigt das notwendige Antriebsmoment und somit die Stromaufnahme der jeweiligen Vereinzelungseinrichtung 36.

Über ein entsprechendes Steuern des Verteilersystems 22 in Abhängigkeit der Stromaufnahme der jeweiligen Vereinzelungseinrichtungen 36 können die mit körnigem Material 100 beladenen Einzelluftströmungen 104 bedarfsgerecht angepasst werden. Die Anpassung kann dabei einzelne, mehrere oder sämtliche Einzelluftströmungen 104 umfassen. Die Einzelluftströmungen können dabei unabhängig voneinander angepasst werden. Da jede mit körnigem Material 100 beladene Einzelluftströmung 104 einer Vereinzelungseinrichtung 36 zugeordnet ist, können die mit körnigem Material 100 beladenen Einzelluftströmungen 104 in Abhängigkeit der Stromaufnahme der jeweils zugeordneten Vereinzelungseinrichtung 36 verändert werden. Das Verändern der mit körnigem Material 100 beladenen Einzelluftströmungen 104 kann beispielsweise das Erhöhen oder Verringern des körnigen Materials 100 innerhalb der entsprechenden Einzelluftströmungen 104 umfassen. Dies kann auch mit einem Verändern des Aufteilungsverhältnisses von der mit körnigem Material 100 beladenen Hauptluftströmung 102 auf die mehreren mit körnigem Material 100 beladenen Einzelluftströmungen 104 einhergehen.

Die Steuerungseinrichtung 46 ist zum Umsetzen einer entsprechenden Regelung signalleitend mit den Vereinzelungseinrichtungen 36 und der Hauptverteileinrichtung 58 verbunden. Zusätzlich können über die signalleitende Verbindung zu dem Dosierorgan 16 die eindosierte Gesamtmenge an körnigem Material 100 und über die signalleitende Verbindung zu dem Gebläse 18 die Strömungseigenschaften der Hauptluftströmung 102 beeinflusst werden.

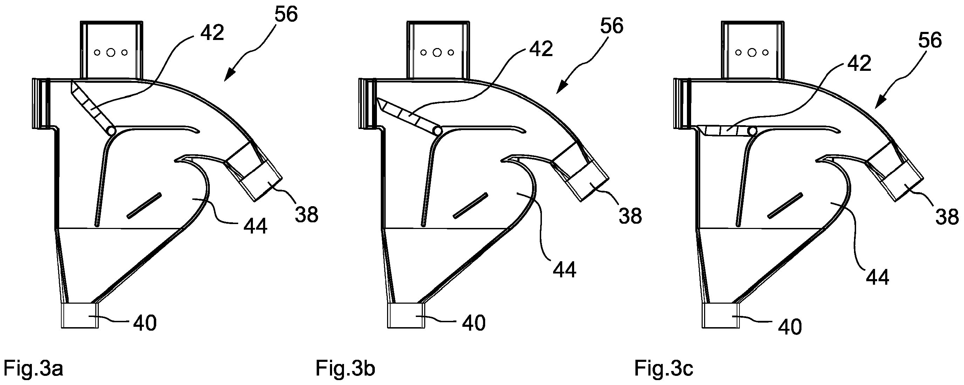

Die Fig. 3a bis 3c zeigen eine von mehreren Umlenkeinheiten 56 einer Hauptverteileinrichtung 58. Die Umlenkeinheit 56 weist ein verstellbares Umlenkelement 42 auf, wobei das Umlenkelement 42 dazu eingerichtet sind, eine mit körnigem Material 100 beladene Luftströmung teilweise oder vollständig wieder der mit körnigem Material 100 beladenen Hauptluftströmung 102 zuzuführen. Das Steuern des Verteilersystems 22 in Abhängigkeit der Stromaufnahme der jeweiligen Vereinzelungseinrichtungen 36 erfolgt dabei durch ein Verstellen der Umlenkelemente 42 der Umlenkeinheiten 56 in Abhängigkeit der Stromaufnahme der jeweiligen Vereinzelungseinrichtungen 36. Das Verstellen eines Umlenkelements 42 umfasst das Ändern der Ausrichtung des Umlenkelements 42, wobei das Umlenkelement 42 zwischen einer geöffneten und einer geschlossenen Position verbracht werden kann, um den Durchfluss an körnigem Material 100 zu steuern.

Die Fig. 3a zeigt eine Umlenkeinheit 56, bei welcher das Umlenkelement 42 die direkte Verbindung zu der Zuführleitung 38 vollständig sperrt, sodass kein körniges Material 100 die direkte Verbindung zu der Zuführleitung 38 passieren kann. Die mit dem körnigem Material 100 beladene umgelenkte Luftströmung wird in Richtung der Rückführleitung transportiert. Über eine Bypassleitung 44 kann jedoch ein Teil der umgelenkten Luftströmung in Richtung der Zuführleitung 38 umgeleitet werden. Abhängig von der Ausgestaltung der Bypassleitung 44 kann innerhalb der Bypassleitung 44 eine teilweise oder vollständige Abscheidung von körnigem Material 100 erfolgen. Die Bypassleitung 44 dient im Wesentlichen zum Abtransport der Luft in Richtung der Vereinzelungseinrichtung 36, wenn das Umlenkelement 42 die direkte Verbindung zu der Zuführleitung 38 teilweise oder vollständig sperrt, sodass ein Zusammenbrechen der Förderung innerhalb der Förderleitung 20 durch die zurückgeführte Luftströmung vermieden wird.

Die Fig. 3b zeigt eine Umlenkeinheit 56, bei welcher das Umlenkelement 42 die direkte Verbindung zu der Zuführleitung 38 teilweise sperrt, sodass lediglich eine verringerte Menge an körnigem Material 100 die direkte Verbindung zu der Zuführleitung 38 passieren kann. Ein anderer Teil wird umgelenkt und in Richtung der Rückführleitung transportiert.

Die Fig. 3c zeigt eine Umlenkeinheit 56, bei welcher das Umlenkelement 42 die direkte Verbindung zu der Zuführleitung 38 vollständig freigibt, sodass die gesamte Menge an körnigem Material 100 die direkte Verbindung zu der Zuführleitung 38 passieren kann. Die Verbindung zu der Rückführleitung 40 und der Bypassleitung 44 wird in dieser Stellung vollständig durch das Umlenkelement 42 gesperrt.

Der Menge des den jeweiligen Vereinzelungseinrichtungen 36 zugleiteten körnigen Materials 100 kann durch Einstellen geeigneter Ausrichtungen an den jeweiligen Umlenkelementen 42 erfolgen. Alternativ können die Umlenkelemente 42 der einzelnen Umlenkeinheiten 56 auch gepulst zwischen einer vollständig geöffneten und einer vollständig geschlossenen Position verbracht werden, um den Durchfluss an körnigem Material zu steuern.

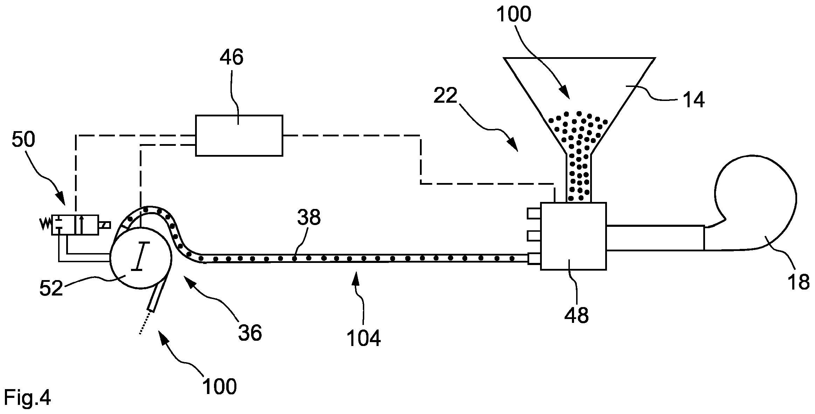

Die Fig. 4 zeigt ein Verteilersystem 22 mit einer Nursingeinrichtung 48, wobei jeder Vereinzelungseinrichtung 36 eine Nursingeinrichtung 48 vorgeschaltet ist. Das Steuern des Verteilersystems 22 in Abhängigkeit der Stromaufnahme der jeweiligen Vereinzelungseinrichtungen 36 umfasst dabei das Steuern der mit körnigem Material 100 beladenen Einzelluftströmungen 104 zwischen den Nursingeinrichtungen 48 und den jeweiligen Vereinzelungseinrichtungen 36. Das Steuern der mit körnigem Material 100 beladenen Einzelluftströmungen 104 zwischen den Nursingeinrichtungen 48 und den jeweiligen Vereinzelungseinrichtungen 36 erfolgt dabei mittels jeweils eines Steuerventils 50, wobei die Steuerventile 50 als 2/2 Wege-Ventile ausgebildet sind und gepulst betrieben werden.

### Bezugszeichenliste

- 10: Ausbringmaschine
- 12: Rahmenaufbau
- 14: Vorratsbehälter
- 16: Dosierorgan
- 18: Fördergebläse
- 20: Förderleitung
- 22: Verteilersystem
- 24: Ausbringelemente
- 26: Tragrahmen
- 28: Walze
- 30: Tiefenführungsrollen
- 32: Striegel
- 34a, 34b: Spuranreißer
- 36: Vereinzelungseinrichtung
- 38: Zuführleitung
- 40: Rückführleitung
- 42: Umlenkelement
- 44: Bypassleitung
- 46: Steuerungseinrichtung
- 48: Nursingeinrichtung
- 50: Steuerventil
- 52: Elektromotor
- 54: Vereinzelungsscheibe
- 56: Umlenkeinheit
- 58: Hauptverteileinrichtung

- 100: körniges Material
- 102: Hauptluftströmung
- 104: Einzelluftströmung

- FR: Fahrtrichtung

## Patentansprüche

1. Verfahren zum Ausbringen von körnigem Material (100), insbesondere Saatgut, mit den Schritten:
- Erzeugen von mehreren mit körnigem Material (100) beladenen Einzelluftströmungen (104) mittels eines Verteilersystems (22) einer landwirtschaftlichen Ausbringmaschine (10), und
- Vereinzeln der Körner des körnigen Materials (100) der Einzelluftströmungen (104) mit jeweils einer elektrisch angetriebenen Vereinzelungseinrichtung (36) der landwirtschaftlichen Ausbringmaschine (10);
- temporäres Bevorraten einer Puffermenge an körnigem Material in den Vereinzelungseinrichtungen;
- Rotieren der Puffermenge einer Vereinzelungseinrichtung innerhalb eines Pufferspalts der entsprechenden Vereinzelungseinrichtung und
- Steuern des Verteilersystems (22) in Abhängigkeit zumindest eines Betriebsparameters der jeweiligen Vereinzelungseinrichtungen (36), wobei der zumindest eine Betriebsparameter der jeweiligen Vereinzelungseinrichtungen (36) die Stromaufnahme der jeweiligen Vereinzelungseinrichtungen (36) umfasst.

2. Verfahren nach Anspruch 1,
**dadurch gekennzeichnet, dass** die Vereinzelungseinrichtungen (36) jeweils dazu eingerichtet sind, eine Puffermenge an körnigem Material (100) temporär zu bevorraten, wobei der zumindest eine Betriebsparameter, in dessen Abhängigkeit das Verteilersystem (22) gesteuert wird, die aktuell bevorratete Puffermenge betrifft oder von der aktuell bevorrateten Puffermenge abhängig ist.

3. Verfahren nach Anspruch 1 oder 2,
**dadurch gekennzeichnet, dass** das Verteilersystem (22) in Abhängigkeit des zumindest einen Betriebsparameters der jeweiligen Vereinzelungseinrichtungen (36) derart gesteuert wird, dass die Vereinzelungseinrichtungen (36) jeweils eine Solldrehzahl aufweisen und/oder derart, dass die in den jeweiligen Vereinzelungseinrichtungen (36) bevorratete Puffermenge an körnigem Material (100) im Wesentlichen übereinstimmt.

4. Verfahren nach einem der vorstehenden Ansprüche,
**dadurch gekennzeichnet, dass** das Verteilersystem (22) eine Hauptverteileinrichtung (58) aufweist und das Erzeugen von mehreren mit körnigem Material (100) beladenen Einzelluftströmungen (104) den folgenden Schritt umfasst:
- Aufteilen einer mit körnigem Material (100) beladenen Hauptluftströmung (102) in mehrere mit körnigem Material (100) beladene Einzelluftströmungen (104) mittels der Hauptverteileinrichtung (58).

5. Verfahren nach Anspruch 4,
**dadurch gekennzeichnet, dass** die Hauptverteileinrichtung (58) verstellbare Umlenkelemente (42) aufweist, wobei die Umlenkelemente (42) jeweils dazu eingerichtet sind, eine mit körnigem Material (100) beladene Einzelluftströmung (104) teilweise oder vollständig wieder der mit körnigem Material (100) beladenen Hauptluftströmung (102) zuzuführen, wobei das Steuern des Verteilersystems (22) in Abhängigkeit des zumindest einen Betriebsparameters der jeweiligen Vereinzelungseinrichtungen (36) den folgenden Schritt umfasst:
- Verstellen einer oder mehrerer Umlenkelemente (42) der Hauptverteileinrichtung (58) in Abhängigkeit des zumindest einen Betriebsparameters der jeweiligen Vereinzelungseinrichtungen (36).

6. Verfahren nach einem der vorstehenden Ansprüche 1 bis 3,
**dadurch gekennzeichnet, dass** das Verteilersystem (22) mehrere Nursingeinrichtungen (48) umfasst, wobei jeder Vereinzelungseinrichtung (36) eine Nursingeinrichtung (48) vorgeschaltet ist und das Steuern des Verteilersystems (22) in Abhängigkeit des zumindest einen Betriebsparameters der jeweiligen Vereinzelungseinrichtungen (36) zumindest einen der folgenden Schritte umfasst:
- Steuern der Nursingeinrichtungen (48) in Abhängigkeit des zumindest einen Betriebsparameters der der jeweiligen Nursingeinrichtung (48) nachgeschalteten Vereinzelungseinrichtung (36);
- Steuern der mit körnigem Material (100) beladenen Einzelluftströmungen (104) zwischen den Nursingeinrichtungen (48) und den jeweiligen Vereinzelungseinrichtungen (36), insbesondere mittels jeweils eines Steuerventils (50).

7. Verfahren nach einem der vorstehenden Ansprüche,
wobei die Vereinzelungseinrichtungen (36) jeweils dazu eingerichtet sind, eine Puffermenge an körnigem Material (100) temporär zu bevorraten, **dadurch gekennzeichnet, dass** die Vereinzelungseinrichtung über einen Pufferspeicher verfügt und die Puffermenge in dem Pufferspeicher bevorratet wird.

8. Verfahren nach Anspruch 7,
wobei die Vereinzelungseinrichtungen derart ausgebildet sind, dass der Füllstand des jeweiligen Pufferspeichers das notwendige Antriebsmoment der jeweiligen Vereinzelungseinrichtungen beeinflusst,
**dadurch gekennzeichnet, dass** die jeweiligen Vereinzelungseinrichtungen derart gesteuert oder geregelt werden, dass eine konstante Drehzahl einer Vereinzelungsscheibe oder eines elektromotorischen Antriebs beibehalten wird.

9. Verfahren nach einem der vorstehenden Ansprüche,
**dadurch gekennzeichnet, dass** der zumindest eine Betriebsparameter der jeweiligen Vereinzelungseinrichtungen (36) mittels einer Messsensorik der jeweiligen Vereinzelungseinrichtungen (36) ermittelt wird.

10. Verfahren nach einem der vorstehenden Ansprüche,
**dadurch gekennzeichnet, dass** das Steuern des Verteilersystems (22) in Abhängigkeit des zumindest einen Betriebsparameters der jeweiligen Vereinzelungseinrichtungen (36) den folgenden Schritt umfasst:
- Verändern von einer oder mehreren mit körnigem Material (100) beladenen Einzelluftströmungen (104);
wobei jede mit körnigem Material (100) beladene Einzelluftströmung (104) vorzugsweise einer Vereinzelungseinrichtung (36) zugeordnet ist und die eine oder die mehreren mit körnigem Material (100) beladenen Einzelluftströmungen (104) in Abhängigkeit des zumindest einen Betriebsparameters der jeweils zugeordneten Vereinzelungseinrichtung (36) verändert werden.

11. Landwirtschaftliche Ausbringmaschine (10) für körniges Material (100), mit:
- einem Verteilersystem (22), welches dazu eingerichtet ist, mehrere mit körnigem Material (100) beladene Einzelluftströmungen (104) zu erzeugen;
- mehreren elektrisch antreibbaren Vereinzelungseinrichtungen (36), welche jeweils dazu eingerichtet sind,
- die Körner des körnigen Materials (100) einer Einzelluftströmung (104) zu vereinzeln,
- eine Puffermenge an körnigem Material temporär zu bevorraten, und
- die Puffermenge einer Vereinzelungseinrichtung innerhalb eines Pufferspalts der entsprechenden Vereinzelungseinrichtung rotiert, und einer Steuerungseinrichtung (46), welche dazu eingerichtet ist, das Verteilersystem (22) in Abhängigkeit zumindest eines Betriebsparameters der jeweiligen Vereinzelungseinrichtungen (36) zu steuern, wobei der zumindest eine Betriebsparameter der jeweiligen Vereinzelungseinrichtungen (36) die Stromaufnahme der jeweiligen Vereinzelungseinrichtungen (36) umfasst.

12. Landwirtschaftliche Ausbringmaschine (10) nach Anspruch 11, **dadurch gekennzeichnet, dass** die Vereinzelungseinrichtungen (36) jeweils dazu eingerichtet sind, eine Puffermenge an körnigem Material (100) temporär zu bevorraten, **dadurch gekennzeichnet, dass** die Vereinzelungseinrichtungen über einen Pufferspeicher verfügen und die Puffermenge in dem Pufferspeicher bevorratet wird.

13. Landwirtschaftliche Ausbringmaschine (10) nach einem der Ansprüche 11 bis 12, **dadurch gekennzeichnet, dass** die landwirtschaftliche Ausbringmaschine (10) dazu eingerichtet ist, das Verfahrens zum Ausringen von körnigem Material (100) nach einem der vorstehenden Ansprüche auszuführen.

## Claims

1. Method for the spreading of granular material (100), in particular seeds, having the steps:
- producing of a plurality of individual air streams (104) which are loaded with granular material (100) by means of a distributor system (22) of an agricultural spreading machine (10), and
- singling of the grains of the granular material (100) of the individual air streams (104) by way of in each case one electrically driven singling device (36) of the agricultural spreading machine (10);
- temporary storing of a buffer quantity of granular material in the singling devices;
- rotating of the buffer quantity of a singling device within a buffer gap of the corresponding singling device, and
- controlling of the distributor system (22) in a manner which is dependent on at least one operating parameter of the respective singling devices (36), the at least one operating parameter of the respective singling devices (36) comprising the current consumption of the respective singling devices (36).

2. Method according to Claim 1, **characterized in that** the singling devices (36) are set up in each case to temporarily store a buffer quantity of granular material (100), the at least one operating parameter, in a manner dependent on which the distributor system (22) is controlled, relates to the currently stored buffer quantity or is dependent on the currently stored buffer quantity.

3. Method according to Claim 1 or 2, **characterized in that** the distributor system (22) is controlled in a manner which is dependent on the at least one operating parameter of the respective singling devices (36) in such a way that the singling devices (36) in each case have a setpoint rotational speed, and/or in such a way that the buffer quantity of granular material (100) which is stored in the respective singling devices (36) matches substantially.

4. Method according to one of the preceding claims, **characterized in that** the distributor system (22) has a main distributing device (58), and the producing of a plurality of individual air streams (104) which are loaded with granular material (100) comprises the following step:
- dividing by means of the main distributing device (58) of a main air stream (102) which is loaded with granular material (100) into a plurality of individual air streams (104) which are loaded with granular material (100).

5. Method according to Claim 4, **characterized in that** the main distributing device (58) has adjustable deflecting elements (42), the deflecting elements (42) being set up in each case to partially or completely feed an individual air stream (104) which is loaded with granular material (100) again to the main air stream (102) which is loaded with granular material (100), the controlling of the distributor system (22) in a manner which is dependent on the at least one operating parameter of the respective singling devices (36) comprising the following step:
- adjusting of one or more deflecting elements (42) of the main distributing device (58) in a manner which is dependent on the at least one operating parameter of the respective singling devices (36).

6. Method according to one of the preceding Claims 1 to 3, **characterized in that** the distributor system (22) comprises a plurality of nursing devices (48), a nursing device (48) being connected upstream of each singling device (36), and the controlling of the distributor system (22) in a manner which is dependent on the at least one operating parameter of the respective singling devices (36) comprising at least one of the following steps:
- controlling of the nursing devices (48) in a manner which is dependent on the at least one operating parameter of the singling device (36) which is connected downstream of the respective nursing device (48),
- controlling of the individual air streams (104) which are loaded with granular material (100) between the nursing devices (48) and the respective singling devices (36), in particular by means of in each case one control valve (50).

7. Method according to one of the preceding claims, the singling devices (36) being set up in each case to temporarily store a buffer quantity of granular material (100), **characterized in that** the singling device has a buffer store, and the buffer quantity is stored in the buffer store.

8. Method according to Claim 7, the singling devices being configured in such a way that the filling level of the respective buffer store influences the necessary drive torque of the respective singling devices, **characterized in that** the respective singling devices are open-loop or closed-loop controlled in such a way that a constant rotational speed of a singling disc or of an electric motor drive is maintained.

9. Method according to one of the preceding claims, **characterized in that** the at least one operating parameter of the respective singling devices (36) is determined by means of a measuring sensor system of the respective singling devices (36).

10. Method according to one of the preceding claims, **characterized in that** the controlling of the distributor system (22) in a manner which is dependent on the at least one operating parameter of the respective singling devices (36) comprises the following step:
- modifying of one or more individual air streams (104) which are loaded with granular material (100); each individual air stream (104) which is loaded with granular material (100) preferably being assigned to a singling device (36), and the one or more individual air streams (104) which are loaded with granular material (100) being modified in a manner which is dependent on the at least one operating parameter of the respective associated singling device (36).

11. Agricultural spreading machine (10) for granular material (100), with:
- a distributor system (22) which is set up to produce a plurality of individual air streams (104) which are loaded with granular material (100);
- a plurality of electrically drivable singling devices (36) which are set up in each case
- to single the grains of the granular material (100) of an individual air stream (104),
- to temporarily store a buffer quantity of granular material,
and
- the buffer quantity of a singling device rotating within a buffer gap of the corresponding singling device,
and a control device (46) which is set up to control the distributor system (22) in a manner which is dependent on at least one operating parameter of the respective singling devices (36), the at least one operating parameter of the respective singling devices (36) comprising the current consumption of the respective singling devices (36).

12. Agricultural spreading machine (10) according to Claim 11, **characterized in that** the singling devices (36) are set up in each case to temporarily store a buffer quantity of granular material (100), **characterized in that** the singling devices have a buffer store, and the buffer quantity is stored in the buffer store.

13. Agricultural spreading machine (10) according to either of Claims 11 and 12, **characterized in that** the agricultural spreading machine (10) is set up to carry out the method for the spreading of granular material (100) according to one of the preceding claims.

## Revendications

1. Procédé d'épandage d'un matériau en grains (100), en particulier des semences, le procédé comprenant les étapes suivantes :
- générer une pluralité de flux d'air individuels (104), chargés de matériau en grains (100), au moyen d'un système de distribution (22) d'une épandeuse agricole (10), et
- séparer les grains du matériau en grains (100) des flux d'air individuels (104) à chaque fois avec un dispositif de séparation à entraînement électrique (36) de l'épandeuse agricole (10) ;
- stocker temporairement une quantité tampon de matériau en grains dans les dispositifs de séparation ;
- mettre en rotation la quantité tampon d'un dispositif de séparation à l'intérieur d'un espace tampon du dispositif de séparation correspondant
et
- commander le système de distribution (22) en fonction d'au moins un paramètre de fonctionnement des dispositifs de séparation respectifs (36), l'au moins un paramètre de fonctionnement des dispositifs de séparation respectifs (36) comprenant la consommation de courant des dispositifs de séparation respectifs (36) .

2. Procédé selon la revendication 1,
**caractérisé en ce que** les dispositifs de séparation (36) sont chacun conçus pour stocker temporairement une quantité tampon de matériau en grains (100), l'au moins un paramètre de fonctionnement, en fonction duquel le système de distribution (22) est commandé, concernant la quantité tampon actuellement stockée ou dépendant de la quantité tampon actuellement stockée.

3. Procédé selon la revendication 1 ou 2,
**caractérisé en ce que** le système de distribution (22) est commandé en fonction de l'au moins un paramètre de fonctionnement des dispositifs de séparation respectifs (36) de telle sorte que les dispositifs de séparation (36) aient chacun une vitesse de rotation de consigne et/ou de telle sorte que les quantités tampon de matériau en grains (100) stockées dans les dispositifs de séparation respectifs (36) coïncident sensiblement.

4. Procédé selon l'une des revendications précédentes, **caractérisé en ce que** le système de distribution (22) comporte un dispositif de distribution principal (58) et la génération d'une pluralité de flux d'air individuels (104) chargés en matériau en grains (100) comprend l'étape suivante :
- diviser un flux d'air principal (102), chargé en matériau en grains (100), en une pluralité de flux d'air individuels (104), chargés en matériau en grains (100), au moyen du dispositif de distribution principal (58) .

5. Procédé selon la revendication 4,
**caractérisé en ce que** le dispositif de distribution principal (58) comporte des éléments de déviation réglables (42), les éléments de déviation (42) étant chacun adaptés pour ramener partiellement ou complètement un flux d'air individuel (104), chargé en matériau en grains (100), au flux d'air principal (102), chargé en matériau en grain (100), la commande du système de distribution (22) en fonction d'au moins un paramètre de fonctionnement des dispositifs de séparation respectifs (36) comprenant l'étape suivante :
- régler un ou plusieurs éléments de déviation (42) du dispositif de distribution principal (58) en fonction de l'au moins un paramètre de fonctionnement des dispositifs de séparation respectifs (36).

6. Procédé selon l'une des revendications 1 à 3 précédentes,
**caractérisé en ce que** le système de distribution (22) comprend une pluralité de dispositifs de soins (48), un dispositif de soins (48) étant monté en amont de chaque dispositif de séparation (36) et la commande du système de distribution (22) en fonction de l'au moins un paramètre de fonctionnement des dispositifs de séparation respectifs (36) comprenant l'une au moins des étapes suivantes :
- commander les dispositifs de soins (48) en fonction de l'au moins un paramètre de fonctionnement du dispositif de séparation (36) monté en aval du dispositif de soins respectif (48) ;
- commander les flux d'air individuels (104), chargés en matériau en grains (100), entre les dispositifs de soins (48) et les dispositifs de séparation respectifs (36), en particulier au moyen d'une soupape de commande respective (50).

7. Procédé selon l'une des revendications précédentes,
les dispositifs de séparation (36) étant chacun adaptés pour stocker temporairement une quantité tampon de matériau en grains (100), **caractérisé en ce que** le dispositif de séparation dispose d'un accumulateur tampon et la quantité tampon est stockée dans l'accumulateur tampon.

8. Procédé selon la revendication 7, les dispositifs de séparation étant conçus de telle sorte que le niveau de remplissage de l'accumulateur tampon respectif influe sur le couple d'entraînement nécessaire des dispositifs de séparation respectifs,
**caractérisé en ce que** les dispositifs de séparation respectifs sont commandés ou régulés de façon à maintenir une vitesse de rotation constante d'un disque de séparation ou d'un entrainement par moteur électrique.

9. Procédé selon l'une des revendications précédentes,
**caractérisé en ce que** l'au moins un paramètre de fonctionnement des dispositifs de séparation respectifs (36) est déterminé au moyen d'un système de capteurs de mesure des dispositifs de séparation respectifs (36).

10. Procédé selon l'une des revendications précédentes,
**caractérisé en ce que** la commande du système de distribution (22) en fonction de l'au moins un paramètre de fonctionnement des dispositifs de séparation respectifs (36) comprend l'étape suivante :
- modifier un ou plusieurs flux d'air individuels (104), chargés en matériau en grains (100) ;
chaque flux d'air individuel (104), chargé en matériau en grains (100), étant de préférence associé à un dispositif de séparation (36) et le ou les flux d'air individuels (104), chargés en matériau en grains (100), étant modifiés en fonction de l'au moins un paramètre de fonctionnement du dispositif de séparation (36) respectivement associé.

11. Épandeuse agricole (10) destinée à un matériau en grains (100) et comprenant :
- un système de distribution (22) qui est adapté pour générer une pluralité de flux d'air individuels (104) chargés en matériau en grains (100) ;
- une pluralité de dispositifs de séparation à entraînement électrique (36) qui sont chacun adaptés pour
- séparer les grains du matériau en grains (100) d'un flux d'air individuel (104),
- stocker temporairement une quantité tampon de matériau en grains,
et
- mettre en rotation la quantité tampon d'un dispositif de séparation à l'intérieur d'un espace tampon du dispositif de séparation correspondant et
- un dispositif de commande (46) qui est adapté pour commander le système de distribution (22) en fonction d'au moins un paramètre de fonctionnement des dispositifs de séparation respectifs (36), l'au moins un paramètre de fonctionnement des dispositifs de séparation respectifs (36) comprenant la consommation de courant des dispositifs de séparation respectifs (36) .

12. Épandeuse agricole (10) selon la revendication 11, **caractérisée en ce que** les dispositifs de séparation (36) sont chacun adaptés pour stocker temporairement une quantité tampon de matériau en grains (100), **caractérisée en ce que** les dispositifs de séparation disposent d'un accumulateur tampon et la quantité tampon est stockée dans l'accumulateur tampon.

13. Épandeuse agricole (10) selon l'une des revendications 11 et 12,
**caractérisée en ce que** l'épandeuse agricole (10) est adaptée pour mettre en œuvre le procédé d'épandage de matériau en grains (100) selon l'une des revendications précédentes.
